# EUROPEAN PATENT APPLICATION

(11) **EP 2 472 797 A1**
(43) Date of publication of application: **04.07.2012**
(21) Application number: 10197346.9
(22) Date of filing: 30.12.2010
(51) Int. Cl.: H04L 12/56, H04Q 11/00

(54) **Method for dynamic packet-optical server network**

(71) Applicant: Nokia Siemens Networks Oy, 02610 Espoo (FI)
(72) Inventor: Stademann, Rainer, 82335, Berg (DE); Ruckstuhl, Hanspeter, 82515, Wolfratshausen (DE); Theimer, Thomas, 82065, Baierbrunn (DE); Winkelmann, Rudolf, 81675, München (DE)

(57) **Abstract**

A method for reconfiguration of a Label Switched Path(s) (LSP) of a first client of a packet-optical transport network, the packet-optical transport network including a first LSR-user-plane unit, a second LSR user plane unit, and a common control unit, the method comprising: transporting the LSP of the first client directly over a common link to a first network element, the first network element comprising the common control unit, connecting the common link by means of a bypass unit to the first LSR-user-plane unit, wherein the first client exchanges LSP specific control messages with the control unit, and the first client continues to exchange LSP specific control messages with the control unit after the common link with the LSP has been switched over from the first LSR-user-plane unit to the second LSR user plane unit.

## Description

### FIELD OF THE INVENTION

The invention refers to method and an apparatus for signal processing in a communication system (e.g. an optical communication system).

### BACKGROUND OF THE INVENTION

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Average traffic volume in networks has been increasing since years with a rate of 50% to 60% per year, in some networks growth rate is even higher. On the other hand core router switching capacity per rack increases only with 15-22% per year. This exponential gap results in exploding CAPEX and OPEX (e.g. power consumption) especially for the electronic packet switching in large scale backbone networks.

High capacity backbone/core networks are built today by large scale packet switches interconnected by high speed optical links using dense wavelength division multiplexed (DWDM) optical transport networks. Optical connectivity between sites is today still rather static and rigid. Flexible traffic routing and traffic grooming is predominantly performed by electronic switches.

A more optimized and targeted use of expensive electronic packet switching resources by a more dynamic optical interconnectivity is an important approach to increase scalability of backbone networks. This requires a closer interworking of the packet switching and optical switching layers in a dynamic packet-optical transport network.

For this purpose the industry has standardized and developed in the last years the GMPLS architecture and control protocols, which generalizes the MPLS framework from packet label switching towards other switching technologies like optical circuit and lambda switching.

A major disadvantage of the GMPLS architecture is that it requires disseminating state information (e.g. traffic engineering (TE) states) of the optical network domain into the packet switching domain for finding a optimal or near-optimal path for a traffic demand. That counteracts an independent management of domains and therefore increases operational complexity.

However, confidential TE state information cannot be exchanged between two different carrier networks. Therefore the question arises how traffic streams can be transported across two different administrational domains, while optically bypassing expensive packet switching whenever possible.

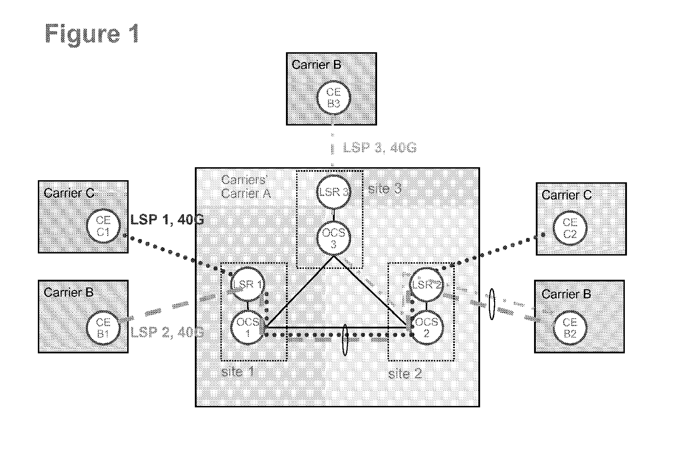

Figures 1 shows a simple use case. The scenario is a carriers' carrier scenario, in which carriers B and C use an MPLS service of carrier A to interconnect their geographically dispersed regional network segments.

Carrier A has three sites each hosting an optical circuits switching function (OCS) and a label switched (LS) router. The three sites are interconnected by the three optical circuit switching functions OCS 1, 2 and 3 (e.g. transponders and ROADM) and 3 fibers. It is assumed that the optical network operates with 100G lambda granularity.

Carrier C has set up a labeled switched path (LSP) 1 from customer edge router C1 to customer edge router C2. This LSP 1 carries 40G of traffic. Carrier B has a LSP 2 from customer edge B1 to B2 and another LSP 3 from customer edge B3 to B2. All LSP carry 40G of traffic.

For carrier A it makes sense to use LSR1 for multiplexing LSP 1 and LSP 2 in order to efficiently utilize a single 100G lambda for the transport to site 2. Here packet switching is needed in LSR 2 to switch the LSP traffic from all three LSP onto the appropriate access links to the two different customer edges.

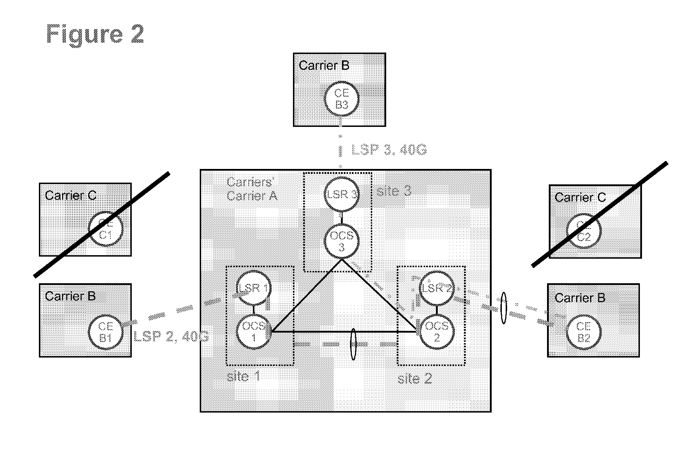

Figure 2 shows how situation changes, after carrier C has terminated business relationship with carrier A. In consequence LSP 1 is removed from carrier A network. This removes the need to multiplex packets in LSR 1. Nevertheless the traffic of LSP 2 of carrier B still passes unnecessarily through the LSR 1.

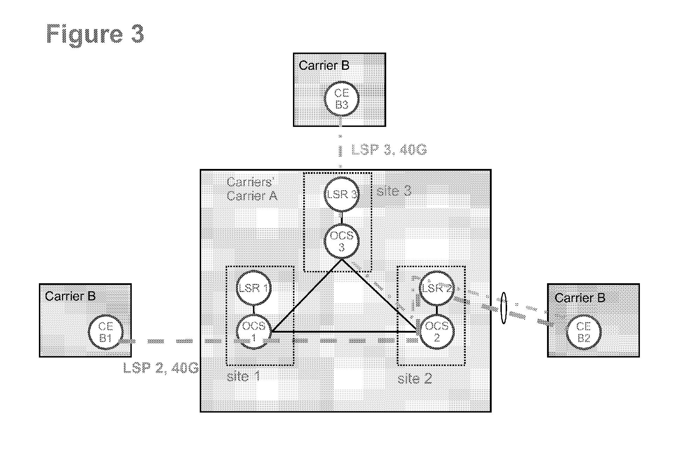

For this simple example, the problem is how to re-configure LSP 2 according to figure 3 to save the LSR 1 switching resources. Note, that this re-configuration is a matter of the efficiency of carrier A network only. Therefore the impact to carrier B needs to be minimized. Especially it must be avoided to disseminate any traffic engineering and/or topology information of the carrier A network to carrier B.

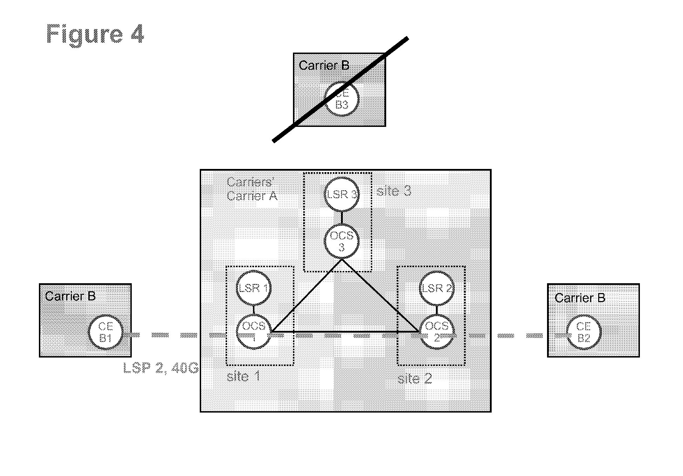

Figure 4 shows a further re-configuration step. This time carrier B closes site 3 and only LSP 2 stays in the network. In this case also traffic grooming by LSR 2 is no longer needed anymore. That is LSP 2 should not traverse any packet switching in carrier A network, and should utilize only optical circuit switching. Again the impact of the re-configuration to carrier B should be minimized.

Generally the traffic optimization problem in a network is much more complex and has been extensively studied in literature. Nevertheless the basic problem for inter domains scenarios remains as described in the simple example. It is the problem to re-configure one or more LSP within a packet-optical server network while minimizing the impact to the clients of the server network.

The problem to be solved is to overcome the disadvantages stated above and in particular to provide a system which is able to re-configure one or more LSP within a packet-optical server network while minimizing the impact to the clients of the server network.

### SUMMARY OF THE INVENTION

In order to overcome the above-described need in the art, the present invention discloses a method for reconfiguration of a Label Switched Path(s) (LSP) of a first client of a packet-optical transport network, the packet-optical transport network including a first LSR-user-plane unit, a second LSR user plane unit, and a common control unit, the method comprising: transporting the LSP of the first client directly over a common link to a first network element, the first network element comprising the common control unit, connecting the common link by means of a bypass unit to the first LSR-user-plane unit, wherein the first client exchanges LSP specific control messages with the control unit, and the first client continues to exchange LSP specific control messages with the control unit after the common link with the LSP has been switched over from the first LSR-user-plane unit to the second LSR user plane unit.

In a further embodiment, the label used for a LSP to or from the first client remains unchanged after switching over the link with the LSP from the first LSR user plane unit to the second LSR user plane unit.

It is also an embodiment that the packet-optical transport network further includes a packet operation unit configured to translate labels for the packets of the LSP.

In a next embodiment, in the first network element a packet operation unit inserts packets into a packet stream.

In an alternative embodiment, the first network element a packet operation unit removes packets from a packet stream.

It is also an embodiment, that in the first network element a packet operation unit modifies packets of a packet stream.

In a further embodiment, the said packet operation unit processes packets for Operation, Administration and Maintenance (OAM) purposes.

In a next embodiment, the packet operation unit processes packets for in-band signalling purposes.

The method, the apparatus and the system provided, in particular, bears the following advantages:
a) They increase scalability of backbone networks
b) They re-configure one or more LSP within a packet-optical server network while minimizing the impact to the clients of the server network.
c) They are easy to implement.

### BRIEF DESCRIPTION OF THE DRAWINGS

The invention is explained by way of example in more detail below with the aid of the attached drawings.
Fig. 1 is a schematic representation of a simple use case of a carriers' carrier scenario with three LSP.
Figure 2 is a schematic representation of a simple use case which changes after that carrier C has terminated business relation with carrier A.
Figure 3 shows the bypass situation after LSP 2 is re-optimized.
Figure 4 shows a full bypass situation.
Figure 5 is a schematic representation of the basic components of a network element according to an embodiment of the invention.
Figure 6 is a schematic representation of a network example, according to an embodiment of the invention.
Figure 7 is a schematic representation according to an embodiment of the invention which shows how labels stay unchanged when a LSP is re-configured.
Figure 8 is a schematic representation according to an embodiment of the invention which shows how a packet operation unit performs label operations.
Figure 9 is a schematic representation according to an embodiment of the invention which shows an example of a packet operation unit, as part of a transponder.

### DESCRIPTION OF THE INVENTION

As regards the description of FIG 1, FIG 2, FIG 3 and FIG 4 reference is made to the background of the invention.

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

Embodiments of the invention provide a system and a mechanism for dynamic optical bypass in a hybrid LSR/optical transport node containing both electrical LSR-UP functions as well as optical switching. The transport node itself controls the optical bypass process, with minimal impact on clients of the transport service. In particular, the control plane relationships between network nodes are not affected by the optical bypass.

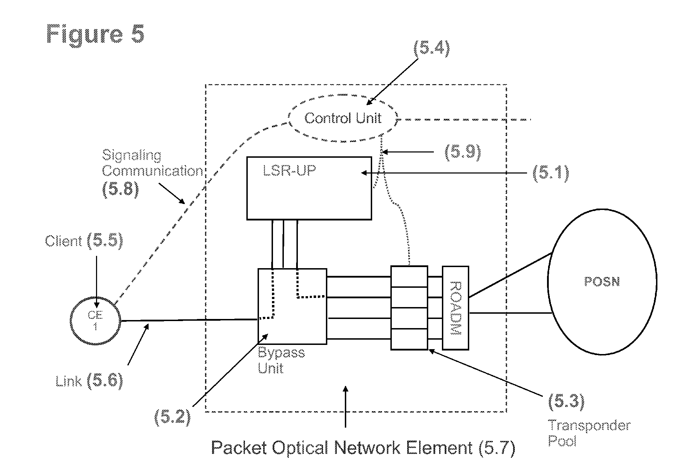

Figure 5 shows one embodiment of a network element (5.7) for a packet-optical server network (POSN) which includes
a) an LSR-user-plane unit (LSR-UP) (5.1)
b) a bypass unit (5.2)
c) a transponder pool (5.3) and a ROADM
d) a common control unit (5.4)

As an alternative, also multiple units of type (5.1), (5.2) and (5.3) are possible which can also be geographically distributed, but are commonly controlled.

A client router (5.5) is connected to the network element (5.7) by a least one link (5.6). The bypass unit (5.2) may either connect the link to an internal LSR-UP, or may bypass the LSR-UP and connect the link to a transponder of the pool (5.3). A transponder performs OEO (optic-electronic-optic) conversion and transmits and receives light with a defined wavelength (a lambda) usually via a re-configurable optical add-drop multiplexer (ROADM) to and from the other network elements of the POSN.

The bypass unit (5.2) can also connect a port of the LSR-UP (5.1) to a transponder. The bypass unit can be implemented preferably by a micromechanical fiber switch. However, also an electronic circuit switch like a cross-bar switch is another option.

The client router (5.5) communicates via the signaling communication (5.8) with the common control unit (5.4). The signaling may be transported either in-band or out-of-band. In the first case, signaling messages are removed from and inserted into the user plane traffic stream either by signaling filter functions in the LSR-UP or in the bypass case by signaling filter functions implemented as part of the transponders. If in-band signaling is used messages are transported via the internal signaling interconnect (5.9) to and from the control unit (5.4).

The preferable implementation uses an out-of-band signaling communication, as this does not need signaling filter functions as part of the user plane.

In a situation in which packet switching by the LSR-UP is unnecessary or sub-optimal as shown in the example of figure 2, the traffic to and from client router (5.5) can be redirected by the bypass unit directly to a transponder of the pool (5.3).

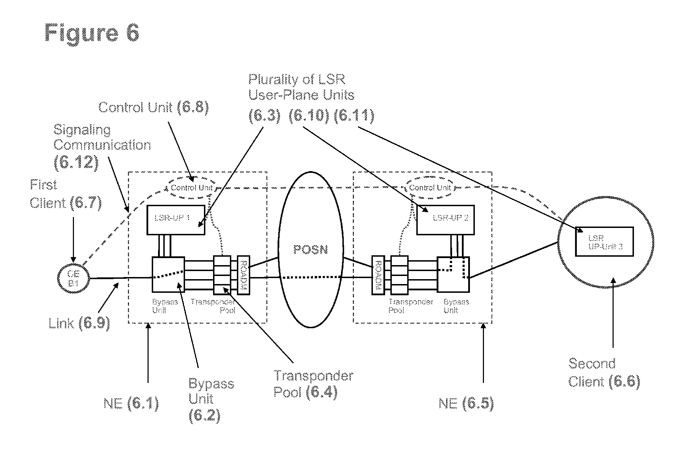

Figure 6 shows the resulting network configuration.

It is worthwhile to observe that that the signaling communication (6.12) between the client router (6.7) and the control unit of network element (6.1) stays unchanged, independently if LSR-UP (6.3) is bypassed or not. This has following important advantages:
- The client router (6.7) is not required to set-up a new signaling relation with another network element of the server network as the provider edge function stays within the NE (6.1).
- Further network elements of the server network stay thus invisible to the client. This significantly simplifies the operation and administration of the client network as well as that of the server network, as interaction between both administrational domains stays minimized.
- The L3 network topology remains stable and unchanged.
- The routing and traffic engineering database in the client network is not impacted by the server network state.
- Confidential routing and topology information of the server network is not disclosed to the client.

As a consequence the server network can be re-optimized, without heavily impacting the client network.

Examples for signaling protocols used between client (6.7) and the control unit (6.8) are Resource Reservation Protocol (RSVP-TE) as described in RFC 3209 ("RSVP-TE: Extensions to RSVP for LSP Tunnels") or labeled E-BGP as described in RFC 3107 ("Carrying Label Information in BGP-4"). However, generally any protocol suitable for label exchange, like LDP is applicable.

In Figure 6, the link (6.9) carrying one or more label switched paths (LSP) from or to client (6.7) is directly connected by the bypass unit (6.2) to a transponder of the pool (6.4), without traversing the LSP-UP (6.3). The transponder interfaces with a colored lambda to the ROADM of the optical network part of the POSN. The lambda is optically routed to the network element (6.5), where it is dropped by a ROADM to a transponder of (6.5). In this example the bypass-unit of (6.5) connects the respective transponder output carrying the LSP(s) to the LSR-UP of NE (6.5). The LSR-UP of NE (6.5) grooms the traffic on packet level, as required in a scenario like shown in figure 3. Finally the LSP(s) are connected to the second client (6.6).

Note, that in a situation like shown in figure 4, alternatively the bypass-unit of NE (6.5) may also bypass the LSR-UP of NE (6.5). In this case no LSR-UP of a network element of the server network is traversed by the LSP(s), but the link (6.9) with the LSP(s) is terminated to an LSR-UP which is part of the second client (6.6).

Therefore, the link (6.9) carrying the LSP(s) from or to the first client (6.7) is connected by the server network to a first LSP-UP selected from the plurality of LSR-UP (6.3), (6.10), (6.11).

In order to minimize the backlash of a re-optimization of the server network to the client network, it is of advantage to keep the labels used for the LSP(s) on link (6.9) unchanged.

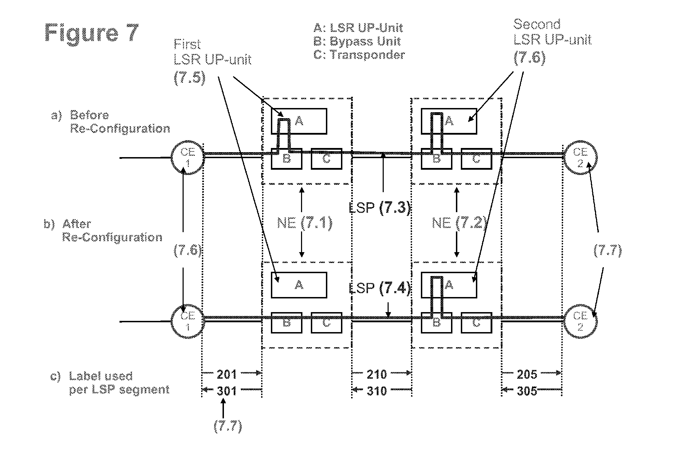

However, embodiments of the invention do not exclude cases where the labels are also updated during a reconfiguration, as all label distribution protocols allow such updates. Figure 7 shows an example of this for the re-configuration of a single bidirectional LSP from client (7.6) to client (7.7). In figure 7a) the LSP is configured to pass both LSR-UP (7.5) and (7.6). Figure 7c) shows an example of the label assignment for the three LSP sections of this case. This label assignment is performed using prior art of the well known MPLS framework.

If the LSP is re-configured and bypasses LSR-UP (7.5) as shown in figure 7b) it is of advantage to keep the labels (7.7) unchanged. This is because the client router (7.6) is not forced to change labels due to a server network internal re-optimization of the LSP. In consequence the re-optimization stays invisible for the client network.

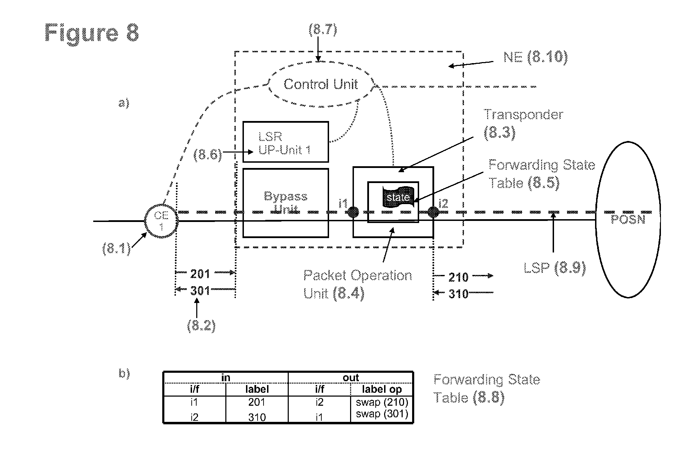

Figure 8 shows an embodiment of the invention in which a packet operation unit (POU) is implemented on the Transponder (8.3). The POU has means
- to insert packets into the packet streams
- to remove packets from the packet streams
- to modify packets received from the POSN and sent to the client and vice versa.

The POU is used to perform the required label operations to keep labels (8.2) unchanged in case the LSR-UP (8.6) is bypassed. For this purpose the label operation unit keeps forwarding state in a forwarding state table (8.5). Figure 8b) shows an embodiment of a simple forwarding state table for this example. The content of the forwarding state table is maintained by the control unit (8.7).

The POU is also used to insert and remove packets for OAM purposes into the packet stream.

It is also used to insert and remove packets of in-band signaling messages into and from the packet stream.

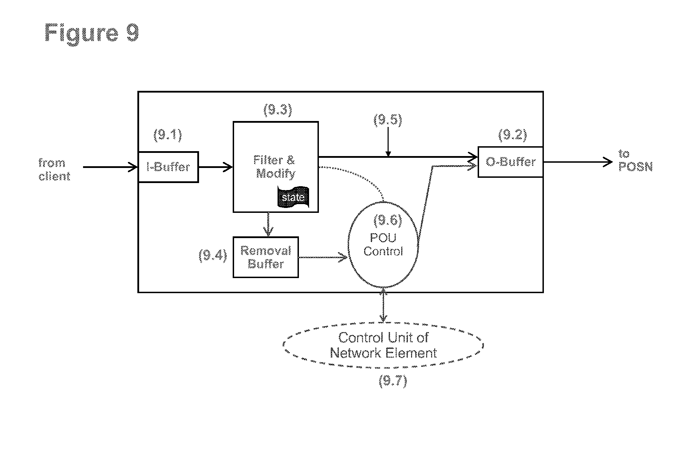

Figure 9 shows an embodiment of the POU for the unidirectional traffic stream from client to POSN. For the other direction a corresponding embodiment can be used.

The POU receives packets from the client site and buffers them in the input buffer (9.1). The packet filter and modify unit (9.3) fetches packets from the input buffer. The packet filter and modify rules of the unit (9.3) are maintained by the POU control unit (9.6). Example for filter and modify rules are the entries shown in forwarding state table (8.8).

If a filter rule triggers a removal of a packet from the incoming stream, the packet is put into removal buffer (9.4). The POU control unit (9,6) fetches packets from the removal buffer (9.4) and sends the packets to the control unit of the network element (9.7) for further processing.

If packets need to be inserted into the packet stream, these packets are sent from the control unit of the network element to the control unit of the POU (9.6). The POU control unit (9.6) inserts the packets into the output buffer (9.2). Here the packets are merged with the packets received from the packet stream (9.5) of the filter and modify unit (9.3).

The output buffer (9.2) sends the packets finally to the remaining part of the transponder for further link and physical layer encapsulation.

The present invention is not limited to the details of the above described principles. The scope of the invention is defined by the appended claims and all changes and modifications as fall within the equivalents of the scope of the claims are therefore to be embraced by the invention. Mathematical conversions or equivalent calculations of the signal values based on the inventive method or the use of analogue signals instead of digital values are also incorporated.

### List of Abbreviations:

- CE: Customer Edge is a set of functions in a client network element which interwork with a PE of a connected provider network element
- DWDM: Dense Wavelength Division Multiplexing
- E-BGP: External Border Gateway Protocol
- Gb/s: gigabit per second
- GMPLS: Generalized MPLS
- LAN: Local Area Network
- LDP: Label Distribution Protocol
- LH: Long Haul
- LSP: Label Switched Path
- LSR: Label Switched (Packet) Router, may be either a Prouter or a PE-router
- LSR-UP: LSR User Plane Unit - A LSR-UP is able to switch packets from an incoming serial packet stream to at least two outgoing serial packet streams on two different ports based on the label information in the packet header. That means a function which only performs packet operations on a single packet stream without switching packets is in the context of this paper not an LSR-UP.
- MP: Maintenance Point
- MPLS: Multi-Protocol Label Switching
- NE: Network Element
- OAM: Operation, Administration and Maintenance
- OCS: Optical Circuit Switch, in the context of this report it is used as a generic optical circuit switching function (Lambda, fiber or ODU switching)
- ODU: Optical Data Unit
- OPEX: Operational Expenditure
- OTN: Optical Transport Network
- P: A P-router is a LSR without PE functions; P-routers do not terminate label switched paths
- PE: Provider Edge is a set of functions in a network element of a server network which performs the interworking with CE clients connected to the network element
- POSN: Packet Optical Server Network - A Packet Optical Server Network offers MPLS connectivity services to a client network, while providing functionality for optical bypass of packet switching according to the invention.
- POU: Packet Operation Unit
- ROADM: Reconfigurable Optical Add Drop Multiplexer
- RSVP-TE: Resource Reservation Protocol: Extensions to RSVP for LSP Tunnels
- TCO: Total Cost of Ownership
- TE: Traffic Engineering
- ULH: Ultra Long Haul

## Claims

1. Method for reconfiguration of a Label Switched Path(s) (LSP) of a first client (6.7) of a packet-optical transport network, the packet-optical transport network including a first LSR-user-plane unit (6.3), a second LSR user plane unit (6.10), and a common control unit (6.8), the method comprising:
transporting the LSP of the first client directly over a common link (6.9) to a first network element (6.1), the first network element (6.1) comprising the common control unit (6.8) ;
connecting the common link (6.9) by means of a bypass unit (6.2) to the first LSR-user-plane unit (6.3)
wherein
the first client (6.7) exchanges LSP specific control messages, with the control unit (6.8), and
the first client (6.7) continues to exchange LSP specific control messages with the control unit (6.8) after the common link (6.9) with the LSP has been switched over from the first LSR-user-plane unit (6.3) to the second LSR user plane unit (6.10).

2. Method according to claim 1, wherein a label (7.7) used for a LSP to or from the first client (7.6) remains unchanged after switching over the link with the LSP from the first LSR user plane unit (7.5) to the second LSR user plane unit (7.6).

3. Method according to claim 2, wherein the packet-optical transport network further includes a packet operation unit (8.4) configured to translate labels (8.2) for the packets of the LSP.

4. Method according to any of the preceding claims, wherein in the first network element (8.10) a packet operation unit (8.4) inserts packets into a packet stream.

5. Method according to any of the preceding claims 1 to 3, wherein in the first network element (8.10) a packet operation unit (8.4) removes packets from a packet stream.

6. Method according to any of the preceding claims 1 to 3, wherein in the first network element (8.10) a packet operation unit (8.4) modifies packets of a packet stream.

7. Method according to claim 4 or 5 or 6, wherein the packet operation unit processes packets for Operation, Administration and Maintenance (OAM) purposes.

8. Method according to claim 4 or 5 or 6, wherein the packet operation unit processes packets for in-band signalling purposes.
